# EUROPÄISCHE PATENTSCHRIFT

(11) **EP 3 243 087 B1**
(45) Veröffentlichungstag und Bekanntmachung des Hinweises auf die Patenterteilung: **28.10.2020**
(21) Anmeldenummer: 16706165.4
(22) Anmeldetag: 22.02.2016
(51) Int. Cl.: G01S 19/36, G01S 19/21, G01S 19/22, G01S 19/42, H01Q 21/20

(54) **VERFAHREN UND ANORDNUNG ZUR POSITIONSBESTIMMUNG**
METHOD AND ASSEMBLY FOR DETERMINING POSITION
PROCÉDÉ ET SYSTÈME DE DÉTERMINATION DE POSITION

(30) Priorität: 10.03.2015 DE 102015204259
(43) Veröffentlichungstag der Anmeldung: 15.11.2017
(73) Patentinhaber: Siemens Mobility GmbH, 81739 München (DE)
(72) Erfinder: IBENDORF, Hendrik, 14532 Kleinmachnow (DE); RICHTER, Olaf, 13591 Berlin (DE)
(86) Internationale Anmeldenummer: PCT/EP2016/053646
(87) Internationale Veröffentlichungsnummer: WO 2016/142158

(56) Entgegenhaltungen:
- EP-A1- 2 367 026
- DE-A1- 10 213 502
- DE-U1-202010 016 003
- JP-A- 2007 024 617

## Beschreibung

Zur Ortung, Navigation und Geschwindigkeitsmessung sollen im Schienenverkehr in verstärktem Maße globale Satellitennavigationssysteme eingesetzt werden. Dabei können sich hinsichtlich der Einhaltung der Genauigkeit der berechneten Position (geographische Daten) Schwierigkeiten durch Reflektionen und Abschattungen der Hochfrequenzsignale an Gebäuden, Felswänden und Tunnelportalen sowie an Brücken und Bahnhöfen ergeben, weil es dadurch zu verfälschten Laufzeiten der Signale und damit zu Ungenauigkeiten bei der Positionsbestimmung kommt. Diese Effekte können dazu führen, dass Fehler bei der berechneten Position auftreten, die mehrere hundert Meter betragen können. Außerdem kann die Genauigkeit der berechneten Position mit solchen Systemen durch Täuschungsversuche beeinträchtigt werden, bei denen gezielt verfälschte Satellitensignale erzeugt werden. Die Empfänger globaler Navigationssatellitensysteme erfassen dann falsche Messwerte zur Berechnung der Position, ohne dies selbst erkennen zu können.

Um den Täuschungsversuchen zu begegnen, sieht man im Schienenverkehr für Satellitennavigationssysteme Empfänger vor, denen zum Plausibilisieren Impulsgeber an den Achsen der Wagen des jeweiligen Schienenfahrzeugs zugeordnet werden. Anhand der Impulsgeber kann dann die Geschwindigkeit sowie der zurückgelegte Weg überprüft werden.

Außerdem werden zusätzlich zu Satellitennavigationssystemen Streckenkarten verwendet, um das mit den Satellitenempfängern erzielte Ergebnis zu plausibilisieren. Für eine Zugfahrt wird durch das zuständige Stellwerk die Fahrstraße eingestellt, und die entsprechenden digitalen Streckendaten dieser einen Fahrstraße werden dem Zug übermittelt. Somit kann auf dem Zug überprüft werden, ob sich die berechnete Position in einem definierten Korridor um das Gleis befindet.

Zur Erhöhung der Genauigkeit bei der Berechnung der Position von Schienenfahrzeugen hat man auch zwei Antennen auf dem Schienenfahrzeug angebracht, die mehrere Meter weit voneinander montiert sind. Damit kann überprüft werden, ob sich der Abstand dieser beiden Antennen auch in den berechneten Positionen wiederfindet.

Auch kann man die Genauigkeit bei der Positionsbestimmung erhöhen, wenn ein GNSS (Global Navigation Satellite System)-Empfänger mit mehreren unterschiedlichen GNSS-Systemen, wie z.B. GPS und GLONASS zusammenarbeitet. Diversitäre GNSS-Empfänger mit Nutzung unterschiedlicher GNSS-Systeme vermindern die Störanfälligkeit.

Es ist ferner aus einer Veröffentlichung der NAVSYS Corporation "Performance and Jamming Test Results of a Digital Beamforming GPS Receiver", Mai 2002, von Alison Brown ein Verfahren zur Berechnung der Position bekannt, bei dem eine Antennenanordnung mit mehreren Antennen verwendet wird; die Antennen sind in einer Ebene nebeneinander liegend und parallel ausgerichtet. Der Antennenanordnung ist ein Phasenschieber mit Steuerung sowie ein GNSS-Empfänger nachgeschaltet. Auf diese Weise wird eine relativ genaue Positionsbestimmung nach dem sogenannten digitalen Beamforming vorgenommen.

Aus der Druckschrift EP 2 367 026 A1 ist ein Verfahren zur Bestimmung von Position und/oder Geschwindigkeit eines Geräts in einem System zur Satellitennavigation bekannt. Das System weist eine Mehrzahl von Navigationssatelliten auf, die Navigationsdaten enthaltende Funksignale aussenden. Zumindest zwei Antennen empfangen die Navigationsdaten enthaltenden Funksignale, wobei die Antennen sensitive Empfangsbereiche aufweisen. Diese sind in unterschiedliche Richtungen ausgerichtet, sodass die Antennen jeweils Funksignale aus einer anderen der unterschiedlichen Richtungen empfangen.

Aus der Druckschrift DE 20 2010 016003 U1 ist eine Vorrichtung zum Empfang und zur Auswertung von Navigationssatelliten-Signalen bekannt. Die Vorrichtung weist dabei Antennen zum Empfang der Navigationssatelliten-Signale in vier oder mehr Empfangskanälen auf. Die Antennen weisen überlappende Empfangsdiagramme auf, so dass der Empfang der Navigationssatelliten-Signale omnidirektional erfolgt. Die Vorrichtung weist außerdem eine Empfangseinheit pro Antenne und pro Empfangskanal auf, die mittels Digitalisierung, Phasenkorrektur und Demodulation der jeweils empfangenen Navigationssatelliten-Signale korrigierte Navigationssatelliten-Signale erzeugt. Die Vorrichtung weist zusätzlich eine Auswerteeinheit auf, die auf Basis der korrigierten Navigationssatelliten-Signale eine aktuelle Position und/oder aktuelle Bewegungsgrößen und/oder eine aktuelle Lage der Vorrichtung im Raum und/oder eine Uhrzeit bestimmt.

Die Erfindung betrifft allgemein ein Verfahren zur Positionsbestimmung unter Nutzung von GNSS (Global Navigation Satellite System) mittels einer mehrere Antennen aufweisenden Antennenanordnung und einer dieser nachgeordneten Empfangssignale-Auswerteanordnung, die an die Antennen angeschlossene GNSS-Empfänger mit einer nachgeschalteten Auswerteeinrichtung enthält.

Der Erfindung liegt die Aufgabe zu Grunde, ein Verfahren zur Positionsbestimmung mittels Satelliten anzugeben, mit dem sich mit vergleichsweise geringem Aufwand eine besonders hohe Zuverlässigkeit bei der Positionsbestimmung erzielen lässt.

Zur Lösung dieser Aufgabe wird bei einem solchen Verfahren eine Antennenanordnung verwendet, bei der die Antennen unterschiedlich unter verschiedenen Richtungsvektoren ausgerichtet sind; in Bezug auf jeden erfassbaren Satelliten werden jeweils die Antennenempfangssignale aller Antennen hinsichtlich ihres satellitenbezogenen Signal-Rausch-Verhältnisses unter Bildung von satellitenspezifischen Signal-Rausch-Verhältnis-Messwerten erfasst, und aus den satellitenspezifischen Signal-Rausch-Verhältnis-Messwerten werden bezüglich jedes Satelliten die satellitenspezifischen Signal-Rausch-Verhältnis-Messwerte ausgewählt, die sich in ihrem Signal-Rausch-Verhältnis positiv von anderen Signal-Rausch-Verhältnis-Messwerten bezüglich jeweils desselben Satelliten abheben; jeweils ein satellitenbezogenes Hauptrichtungsvektor-Signal wird aus jeweils den Richtungs-Vektor-Signalen der Antennen gebildet, deren satellitenspezifischen Signal-Rausch-Verhältnis-Messwerte ausgewählt sind, und die satellitenbezogenen Hauptrichtungsvektor-Signale werden mit die Position der jeweiligen Satelliten am Orbit kennzeichnenden Ausrichtungsvektor-Signalen verglichen; bei geringen Abweichungen erfolgt eine Positionsangabe.

Ein wesentlicher Vorteil des erfindungsgemäßen Verfahrens wird darin gesehen, dass durch die Ausrichtung der Antennen in verschiedene Richtungen sich unterscheidende Antennenempfangssignale empfangen werden, die bei einer Auswertung entsprechend dem erfindungsgemäßen Verfahren zu einer Positionsangabe führen, die sehr verlässlich bzw. zuverlässig ist.

Bei dem erfindungsgemäßen Verfahren können Antennenanordnungen unterschiedlicher Art verwendet werden und auch die Anzahl der Antennen kann unterschiedlich sein. Wichtig ist, dass die Antennen unterschiedlich nach verschiedenen Seiten ausgerichtet sind. Die Zuverlässigkeit der berechneten Position erhöht sich mit der Anzahl der verwendeten Antennen.

Hinsichtlich der erzielbaren Zuverlässigkeit bei der Positionsbestimmung und im Hinblick auf eine kostengünstige Ausgestaltung des erfindungsgemäßen Verfahrens wird es als vorteilhaft angesehen, wenn eine Antennen-Anordnung verwendet wird, bei der die Antennen wie auf den Flächen eines Pyramidenstumpfes platziert sind. Der Begriff "Pyramidenstumpf" wird hier benutzt, um die räumliche Anordnung der Antennen anschaulich zu beschreiben; ein entsprechender Tragkörper für die Antennen muss nicht unbedingt so gestaltet sein.

Die Anzahl der Antennen auf den jeweiligen Flächen des Pyramidenstupfs kann unterschiedlich sein. Als vorteilhaft und im Allgemeinen ausreichend wird es angesehen, wenn eine Antennenanordnung mit jeweils einer Antenne pro Fläche des Pyramidenstupfes verwendet wird.

Der Pyramidenstumpf kann mit unterschiedlich vielen Seitenflächen versehen sein; vorteilhaft erscheint es im Hinblick auf einen geringen Herstellungsaufwand der Antennenanordnung, wenn eine Antennenanordnung verwendet wird, bei der die Antennen wie auf den Flächen eines Pyramidenstumpfes mit quadratischer Grundfläche und auf der Oberseite platziert sind.

Zur weiteren Erhöhung der Zuverlässigkeit bei der Positionsbestimmung nach dem erfindungsgemäßen Verfahren werden vorteilhafterweise die Ausgangssignale der GNSS-Empfänger mit weiteren Ausgangssignalen von zu den GNSS-Empfängern parallel geschalteten, diversitären GNSS-Empfängern verglichen, und es unterbleibt bei Unterschieden zwischen jeweils dem einen Ausgangssignal und dem weiteren Ausgangssignal die Erzeugung des jeweiligen Hauptrichtungsvektors. Damit wird vermieden, dass gegebenenfalls systematische Fehler der GNSS-Empfänger zu Fehlauswertungen führen.

Bei dem erfindungsgemäßen Verfahren können unterschiedlich ausgebildete Auswerteeinrichtungen zum Einsatz kommen. Bevorzugt wird die Verwendung einer digitalen Auswerteeinrichtung in Gestalt eines Mikrokontrollers.

Die Erfindung betrifft ferner eine Anordnung zur Positionsbestimmung unter Nutzung von GNSS (Global Navigation Satellite-System) mit einer mehrere Antennen aufweisenden Antennenanordnung und einer dieser nachgeordneten, mit den Antennenempfangssignalen beaufschlagten Empfangssignale-Auswerteanordnung, die an die Antennen angeschlossene GNSS-Empfänger mit einer nachgeschalteten Auswerteeinrichtung enthält, und stellt sich die Aufgabe, eine solche Anordnung hinsichtlich Zuverlässigkeit bei der Positionsbestimmung und Herstellungskosten optimal auszugestalten.

Zur Lösung dieser Aufgabe weist die Antennenanordnung nach verschiedenen Richtungen ausgerichtete Antennen auf, und die Auswerteeinrichtung ist geeignet, in Bezug auf jeden erfassbaren Satelliten jeweils die Antennenempfangssignale aller Antennen hinsichtlich ihres satellitenbezogenen Signal-Rausch-Verhältnisses unter Bildung von satellitenspezifischen Signal-Rausch-Verhältnis-Messwerten zu erfassen, aus den satellitenspezifischen Signal-Rausch-Verhältnis-Messwerten bezüglich jedes Satelliten die satellitenspezifischen Signal-Rausch-Verhältnis-Messwerte auszuwählen, die sich in ihrem Signal-Rausch-Verhältnis positiv von anderen Signal-Rausch-Verhältnis Messwerten bezüglich jeweils desselben Satelliten abheben, jeweils ein satellitenbezogenes Hauptrichtungsvektor-Signal aus jeweils den Richtungsvektor-Signalen der Antennen zu bilden, deren satellitenspezifischen Signal-Rausch-Verhältnis-Messwerte ausgewählt sind, und die satellitenbezogenen Hauptrichtungsvektor-Signale mit die Position der jeweiligen Satelliten am Orbit kennzeichnenden Ausrichtungsvektor-Signalen zu vergleichen und bei geringen Abweichungen eine Positionsangabe vorzunehmen.

Die erfindungsgemäße Anordnung hat sinngemäß die gleichen Vorteile, wie sie oben zum erfindungsgemäßen Verfahren angegeben sind.

Die Antennenanordnung kann bei der erfindungsgemäßen Anordnung sehr unterschiedlich ausgebildet sein, wenn nur jeweils dafür gesorgt ist, dass die Antennen nach verschiedenen Richtungen ausgerichtet sind.

Bei einer vorteilhaften Ausführungsform der erfindungsgemäßen Anordnung ist bei der Antennenanordnung jeweils eine Antenne auf den Flächen eines Pyramidenstumpfes platziert. Der Pyramidenstumpf kann dabei von einem Kunststoffkörper gebildet sein, auf dessen Flächen sich die Antennen befinden, das sind die Seitenflächen und die Oberfläche des Pyramidenstumpfes.

Als besonders vorteilhaft wird es erachtet, wenn bei der Antennenanordnung die Antennen wie auf den Flächen eines Pyramidenstumpfes mit quadratischer Grundfläche platziert sind. Vorteil dieser Anordnung ist, dass sie relativ leicht herstellbar ist.

Zur weiteren Erhöhung der Genauigkeit der Positionsbestimmung und ihrer Zuverlässigkeit ist es vorteilhaft, wenn zu den GNSS-Empfängern diversitäre GNSS-Empfängern parallel geschaltet sind, denen jeweils Vergleicher nachgeordnet sind, die bei Unterschieden zwischen jeweils einem Ausgangssignal des einen GNSS-Empfängers und einem weiteren Ausgangssignal des diversitären GNSS-Empfängers die Erzeugung der jeweiligen Hauptrichtungsvektor-Signale unterbinden.

Die Auswerteeinrichtung kann bei der erfindungsgemäßen Anordnung unterschiedlich ausgebildet sein. Als besonders vorteilhaft wird es angesehen, wenn die Auswerteeinrichtung ein Mikrokontroller ist.

Zur weiteren Erläuterung der Erfindung ist in
- Fig.1: eine Draufsicht auf ein Ausführungsbeispiel einer Antennenanordnung der erfindungsgemäßen Anordnung, in
- Fig.2: ein Schnitt durch die Antennenanordnung nach Figur 1 entlang der Linie I-I, in
- Fig.3: ein Ausführungsbeispiel Auswerteanordnung mit einer an GNSS-Empfänger angeschlossenen Auswerteeinrichtung, in
- Fig.4: eine Seitenansicht auf eine Antennenanordnung gemäß Fig. 2 in einem Einsatzfall mit drei erfassbaren Satelliten und in
- Fig.5: eine Draufsicht auf die Darstellung gemäß Figur 4 wiedergegeben.

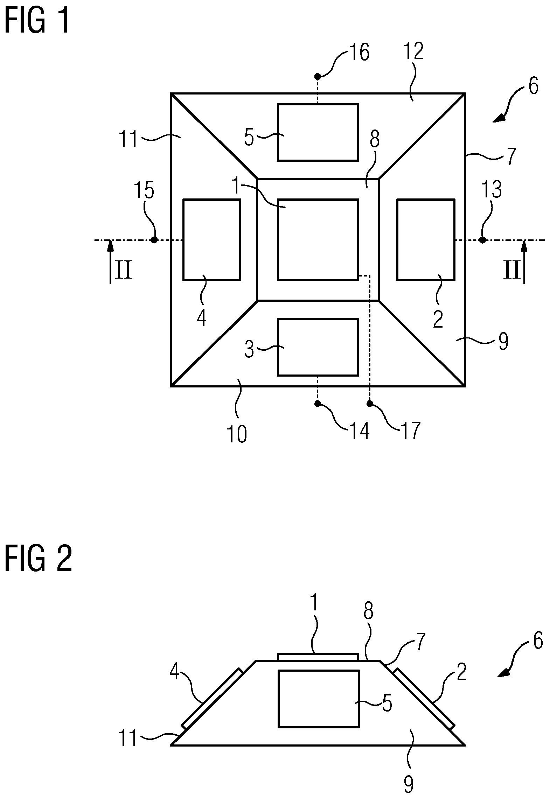

Die Figuren 1 und 2 zeigen Antennen 1 bis 5 einer Antennenanordnung 6, bei der die Antennen 1 bis 5 auf einen pyramidenstumpfartigen Tragkörper 7 aufgebracht sind. Dabei ist die Antenne 1 auf einer Oberseite 8 bzw. oberen Fläche der Antennenanordnung 6 platziert, während die Antennen 2 bis 5 auf Seitenflächen 9, 10, 11 und 12 aufgebracht sind.

Jede der Antennen 2 bis 5 ist mit einem äußeren Anschluss 13, 14, 15 und 16 versehen; ein weiterer äußerer Anschluss 17 führt zur Antenne 1.

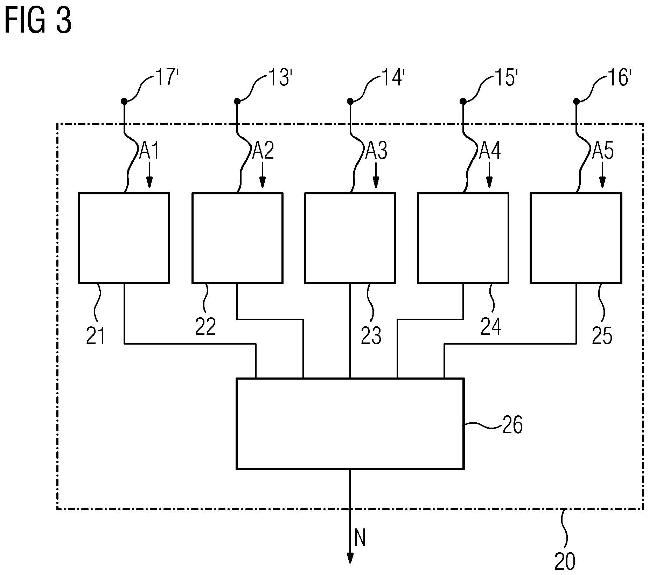

Wie Figur 3 zeigt, ist eine Auswerteanordnung 20 mit äußeren Anschlüssen 17', 13', 14', 15' und 16' versehen, die mit den entsprechenden Anschlüssen 13 bis 17 der Antennenanordnung 6 verbindbar sind (siehe auch Fig.1). Die Auswerteanordnung 20 enthält GNSS-Empfänger 21, 22, 23, 24 und 25, die mit den entsprechenden Antennen 1 bis 5 eingangsseitig verbunden sind. An den Eingängen 17' bis 16' der GNSS-Empfänger 21 bis 25 liegen somit Antennen-Empfangssignale A1 bis A5 an, die in einer von einem Mikrokontroller gebildeten Auswerteeinrichtung 26 ausgewertet werden.

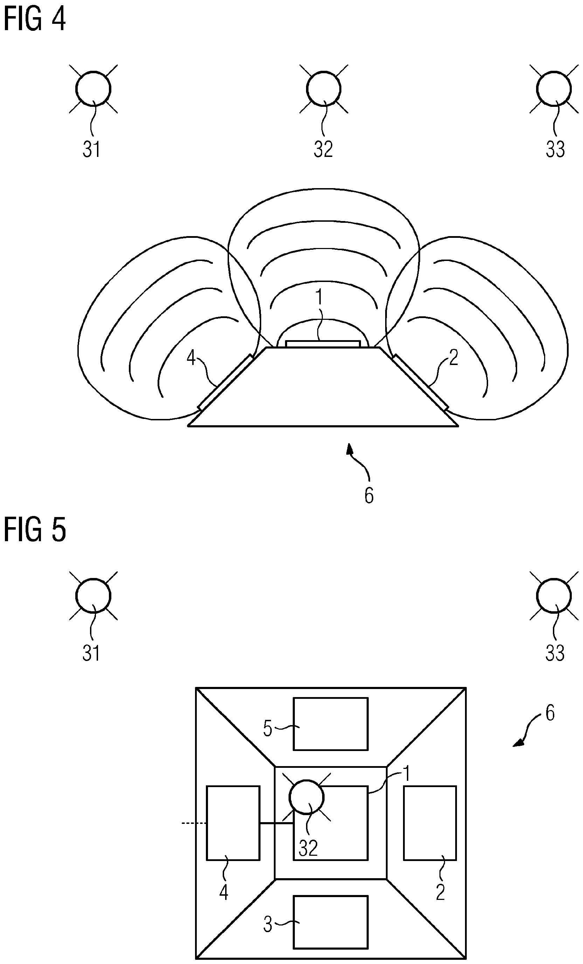

Diese Auswertung erfolgt in der Weise, dass zunächst satellitenbezogenen das jeweilige Signal-Rausch-Verhältnis SNR der Antennenempfangssignale A1 bis A5 der Antennen 1 bis 5 erfasst bzw. gemessen wird. In der nachstehenden Tabelle, sind beispielhaft Messergebnisse bei einer Konstellation angegeben, wie sie die Figuren 4 und 5 zeigen, wo sich Satelliten 31 bis 33 in der dort dargestellten Position in Bezug auf die Antennenanordnung 6 befinden.

| | Satellit 31 | Satellit 32 | Satellit 33 |
|---|---|---|---|
| SNR an Antenne 1 | 12dB | 15dB | 13dB |
| SNR an Antenne 2 | 3dB | 10dB | 12dB |
| SNR an Antenne 3 | 2dB | 10dB | 2dB |
| SNR an Antenne 4 | 12dB | 12dB | 3dB |
| SNR an Antenne 5 | 13dB | 12dB | 12dB |
| Hauptrichtungsvektor | 1-4-5 | 1 | 1-2-5 |

Die Tabelle zeigt, dass hinsichtlich des Satelliten 31 nur an den Antennen 1, 4 und 5 Signale mit einem guten Signal-Rausch-Verhältnis SNR vorliegen, was auf ihre günstige Ausrichtung zu dem Satelliten 31 zurückzuführen ist; die Antennen 2 und 3 empfangen vom Satelliten 31 nur sehr schwache Signale mit einem ungünstigen Signal-Rausch-Verhältnis SNR. Deshalb werden in der Auswerteeinrichtung 26 zur Bildung eines Hauptrichtungsvektors nur die - bekannten - Ausrichtungsvektoren der Antennen 1, 4 und 5 herangezogen; es wird von der Auswerteeinrichtung 26 ein entsprechendes Hauptrichtungsvektor-Signal gebildet.

Hinsichtlich des Satelliten 32 ergibt sich gemäß obiger Tabelle, dass aufgrund seiner relativ ungünstigen Ausrichtung im Hinblick auf diesen Satelliten nicht mehrere Messsignale mit gutem Signal-Rausch-Verhältnis erfasst werden, sondern lediglich das Antennenempfangssignal A2 der Antenne 1, weil sich nur dieses Antennenempfangssignal A2 von den übrigen Antennenempfangssignalen positiv abhebt; der Hauptrichtungsvektor fällt hier mit dem Ausrichtungsvektor der Antenne 1 zusammen. Anders sieht es hinsichtlich des Satelliten 33 aus, weil hier mit den bekannten Ausrichtungsvektoren der Antennen 1, 2 und 5 ein Hauptrichtungsvektor-Signal erzeugt wird; die Antennenempfangssignalen A1, A2 und A5 der Antennen 1, 2 und 5 haben hier nämlich ein signifikant besseres Signal-Rausch-Verhältnis SNR als die Antennenempfangssignale der Antennen 3 und 4.

Satelliten liefern neben den Messwerten für Breite und Länge auch Informationen über ihre Position am Orbit. Diese Informationen werden der Auswerteeinrichtung 26 ebenfalls zugeführt. Die Auswerteeinrichtung 26 kann nun die Positionen der Satelliten 31 bis 33 mit dem jeweiligen Hauptrichtungsvektor vergleichen, indem das jeweilige Hauptrichtungsvektor-Signal mit einem jeweiligen bekannten Ausrichtungsvektor-Signal der Satelliten 31 bis 33 verglichen wird, das entsprechend dem jeweiligen Ausrichtungsvektor vorliegt. Stimmen das jeweilige satellitenbezogene Hauptrichtungsvektor-Signal jeweils mit dem entsprechenden Ausrichtungsvektor-Signal desselben Satelliten weitgehend überein, dann erfolgt eine Positionsangabe, indem die Auswerteeinrichtung 26 ein Navigationssignal N abgibt, das die jeweiligen Positionsdaten beinhaltet; die Positionsbestimmung ist damit beendet.

Erhebliche Abweichungen eines ermittelten Hauptrichtungsvektor-Signals von dem zugehörigen Ausrichtungsvektor-Signal bzw. den Koordinaten im Orbit der Satelliten führen zu dem Ergebnis, dass der entsprechende Satellit fehlerhaft erfasst worden ist und daher nicht zur Positionsbestimmung herangezogen werden kann. Ursachen dafür können ein Störsender oder Reflexionen sein.

Nicht dargestellt der besseren Übersichtlichkeit halber ist in der Figur 3, dass den GNSS-Empfängern 21 bis 25 jeweils ein diversitärer GNSS-Empfänger parallel geschaltet werden kann. Jeweils parallel geschaltete GNSS-Empfänger sind dann ausgangsseitig mit einem ebenfalls nicht dargestellten Vergleicher verbunden, der bei starken Abweichungen der Ausgangsignale der beiden GNSS-Empfänger wegen eines dadurch erkannten systematischen Fehlers die Abgabe eines Navigationssignals unterbindet.

## Patentansprüche

1. Verfahren zur Positionsbestimmung unter Nutzung von GNSS (Global Navigation Satellite System) mittels einer mehrere Antennen (1 bis 5) aufweisenden Antennenanordnung (6) und einer dieser nachgeordneten, mit den Antennenempfangssignalen (A1 bis A5) beaufschlagten Empfangssignale-Auswerteanordnung (20), die an die Antennen (1 bis 5) angeschlossene GNSS-Empfänger (21 bis 25) mit einer nachgeschalteten Auswerteeinrichtung (26) enthält, bei dem eine Antennenanordnung (6) verwendet wird, bei der die Antennen (1 bis 5) unterschiedlich unter verschiedenen Richtungsvektoren ausgerichtet sind, und bei dem
• in Bezug auf jeden erfassbaren Satelliten (31 bis 33) jeweils die Antennenempfangssignale (A1 bis A5) aller Antennen (1 bis 5) hinsichtlich ihres satellitenbezogenen Signal-Rausch-Verhältnisses unter Bildung von satellitenspezifischen Signal-Rausch-Verhältnis-Messwerten erfasst werden, und
• aus den satellitenspezifischen Signal-Rausch-Verhältnis-Messwerten bezüglich jedes Satelliten (z.B 31) die satellitenspezifischen Signal-Rausch-Verhältnis-Messwerte ausgewählt werden, die sich in ihrem Signal-Rausch-Verhältnis positiv von anderen Signal-Rausch-Verhältnis-Messwerten bezüglich jeweils desselben Satelliten (z.B.31) abheben,
**dadurch gekennzeichnet, dass**
• jeweils ein satellitenbezogenes Hauptrichtungsvektor-Signal aus Richtungsvektor-Signalen der Antennen gebildet wird, deren satellitenspezifischen Signal-Rausch-Verhältnis-Messwerte ausgewählt sind, und
• die satellitenbezogenen Hauptrichtungsvektor-Signale mit die Position der jeweiligen Satelliten am Orbit kennzeichnenden Ausrichtungsvektor-Signalen verglichen werden und bei geringen Abweichungen eine Positionsangabe (N) erfolgt.

2. Verfahren nach Anspruch 1,
bei dem eine Antennen-Anordnung (6) verwendet wird, bei der die Antennen (1 bis 5) wie auf den Flächen eines Pyramidenstumpfes platziert sind.

3. Verfahren nach Anspruch 2,
bei dem eine Antennenanordnung (6) verwendet wird, bei der jeweils eine Antenne (1 bis 5) wie auf den Flächen (8 bis 12) eines Pyramidenstumpfes platziert ist.

4. Verfahren nach Anspruch 2 oder 3,
bei dem eine Antennenanordnung (6) verwendet wird, bei der die Antennen (1 bis 5) auf den Flächen (8 bis 12) eines Pyramidenstumpfes mit quadratischer Grundfläche platziert sind.

5. Verfahren nach einem der vorangehenden Ansprüche,
bei dem die Ausgangssignale der GNSS-Empfänger mit weiteren Ausgangssignalen von zu den GNSS-Empfängern parallel geschalteten, diversitären GNSS-Empfängern verglichen werden und bei Unterschieden zwischen jeweils dem einen Ausgangssignal und dem weiteren Ausgangssignal die Erzeugung des jeweiligen Hauptrichtungsvektors unterbleibt.

6. Verfahren nach einem der vorangehenden Ansprüche,
bei dem als Auswerteeinrichtung eine digitale Auswerteeinrichtung in Gestalt eines Mikrokontrollers verwendet wird.

7. Anordnung zur Positionsbestimmung unter Nutzung von GNSS (Global Navigation Satellite System) mit einer mehrere Antennen (1 bis 5) aufweisenden Antennenanordnung (6) und einer dieser nachgeordneten, mit Antennenempfangssignalen (A1 bis A5) beaufschlagten Empfangssignale-Auswerteanordnung (20), die an die Antennen (1 bis 5) angeschlossene GNSS-Empfänger(21 bis 25) mit einer nachgeschalteten Auswerteeinrichtung (26) enthält,
bei der die Antennenanordnung (6) unterschiedlich unter verschiedenen Richtungsvektoren ausgerichtete Antennen (1 bis 5) aufweist, und
bei der die Auswerteeinrichtung (26) dazu ausgebildet ist,
• in Bezug auf jeden erfassbaren Satelliten (31 bis 33) jeweils die Antennenempfangssignale (A1 bis A5) aller Antennen (1 bis 5) hinsichtlich ihres satellitenbezogenen Signal-Rausch-Verhältnisses unter Bildung von satellitenspezifischen Signal-Rausch-Verhältnis-Messwerten zu erfassen, und
• aus den satellitenspezifischen Signal-Rausch-Verhältnis-Messwerten bezüglich jedes Satelliten (z.B. 31) die satellitenspezifischen Signal-Rausch-Verhältnis-Messwerte auszuwählen, die sich in ihrem Signal-Rausch-Verhältnis positiv von anderen Signal-Rausch-Verhältnis Messwerten bezüglich jeweils desselben Satelliten (z.B. 31) abheben,
**dadurch gekennzeichnet, dass** die Auswerteeinrichtung ferner dazu ausgebildet ist,
• jeweils ein satellitenbezogenes Hauptrichtungsvektor-Signal aus Richtungsvektor-Signalen der Antennen (1 bis 5) zu bilden, deren satellitenspezifischen Signal-Rausch-Verhältnis-Messwerte ausgewählt sind, und
• die satellitenbezogenen Hauptrichtungsvektor-Signale mit die Position der jeweiligen Satelliten am Orbit kennzeichnenden Ausrichtungsvektor-Signalen zu vergleichen und bei geringen Abweichungen eine Positionsangabe (N) vorzunehmen.

8. Anordnung nach Anspruch 7,
bei der die Antennen (1 bis 5) auf den Flächen eines Pyramidenstumpfes platziert sind.

9. Anordnung nach Anspruch 8,
bei der bei der Antennenanordnung (6) jeweils eine Antenne (1 bis 5) auf den Flächen (8 bis 12) eines Pyramidenstumpfes platziert ist.

10. Anordnung nach Anspruch 9,
bei der bei der Antennenanordnung die Antennen (1 bis 5) auf den Flächen (8 bis 12) eines Pyramidenstumpfes mit quadratischer Grundfläche platziert sind.

11. Anordnung nach einem der Ansprüche 7 bis 10,
bei der zu den GNSS-Empfängern diversitäre GNSS-Empfänger parallel geschaltet sind, denen jeweils Vergleicher nachgeordnet sind, die bei Unterschieden zwischen jeweils einem Ausgangssignal des einen GNSS-Empfängers und einem weiteren Ausgangssignal des diversitären GNSS-Empfängers die Erzeugung des jeweiligen Hauptrichtungsvektors unterbinden.

12. Anordnung nach einem der Ansprüche 7 bis 11,
bei der die Auswerteeinrichtung (26) ein Mikrokontroller ist.

## Claims

1. Method for determining position using GNSS (Global Navigation Satellite System) by means of an antenna assembly (6) comprising a plurality of antennas (1 to 5) and a received-signal evaluation assembly (20) which is arranged downstream thereof, said evaluation assembly (20) being supplied with the antenna-received signals (A1 to A5) and containing both the GNSS receivers (21 to 25) that are attached to the antennas (1 to 5) and an evaluation device (26) which is connected downstream of said GNSS receivers (21 to 25),
wherein an antenna assembly (6) is used in which the antennas (1 to 5) are oriented differently using various direction vectors, and wherein
• in relation to each detectable satellite (31 to 33), the antenna-received signals (A1 to A5) of all antennas (1 to 5) are detected with regard to their satellite-related signal-to-noise ratio in each case, thus forming satellite-specific signal-to-noise ratio measured values, and
• from the satellite-specific signal-to-noise ratio measured values, in relation to each satellite (e.g. 31), those satellite-specific signal-to-noise ratio measured values are selected which are positively distinguished in their signal-to-noise ratio from other signal-to-noise ratio measured values relating to the same satellite in each case (e.g. 31),
**characterised in that**
• a satellite-related main direction vector signal is formed in each case from direction vector signals of those antennas whose satellite-specific signal-to-noise ratio measured values are selected, and
• the satellite-related main direction vector signals are compared with orientation vector signals characterising the position of the respective satellites in orbit, and in the event of minor deviations a position indication (N) is given.

2. Method according to claim 1,
wherein an antenna assembly (6) is used in which the antennas (1 to 5) are placed as on the surfaces of a truncated pyramid.

3. Method according to claim 2,
wherein an antenna assembly (6) is used in which one antenna (1 to 5) in each case is placed as on the surfaces (8 to 12) of a truncated pyramid.

4. Method according to claim 2 or 3,
wherein an antenna assembly (6) is used in which the antennas (1 to 5) are placed on the surfaces (8 to 12) of a truncated pyramid having a square base.

5. Method according to one of the preceding claims,
wherein the output signals of the GNSS receivers are compared with further output signals from diversely redundant GNSS receivers which are connected in parallel with the GNSS receivers, and the generation of the respective main direction vector stops if there are differences between the first output signal and the further output signal.

6. Method according to one of the preceding claims,
wherein a digital evaluation device in the form of a microcontroller is used as an evaluation device.

7. Assembly for determining position using GNSS (Global Navigation Satellite System), with an antenna assembly (6) comprising a plurality of antennas (1 to 5) and a received-signal evaluation assembly (20) which is arranged downstream thereof, said evaluation assembly (20) being supplied with the antenna-received signals (A1 to A5) and containing both the GNSS receivers (21 to 25) that are attached to the antennas (1 to 5) and an evaluation device (26) which is connected downstream of said GNSS receivers (21 to 25),
wherein the antenna assembly (6) has antennas (1 to 5) which are oriented differently in various direction vectors, and wherein the evaluation device (26) is embodied
• in relation to each detectable satellite (31 to 33), to detect the antenna-received signals (A1 to A5) of all antennas (1 to 5) with regard to their satellite-related signal-to-noise ratio in each case, thus forming satellite-specific signal-to-noise ratio measured values, and
• from the satellite-specific signal-to-noise ratio measured values, in relation to each satellite (e.g. 31), to select those satellite-specific signal-to-noise ratio measured values which are positively distinguished in their signal-to-noise ratio from other signal-to-noise ratio measured values relating to the same satellite in each case (e.g. 31),
**characterised in that** the evaluation device is further embodied
• to form a satellite-related main direction vector signal in each case from direction vector signals of those antennas (1 to 5) whose satellite-specific signal-to-noise ratio measured values are selected, and
• to compare the satellite-related main direction vector signals with orientation vector signals characterising the position of the respective satellites in orbit, and to give a position indication (N) in the event of minor deviations.

8. Assembly according to claim 7,
wherein the antennas (1 to 5) are placed on the surfaces of a truncated pyramid.

9. Assembly according to claim 8,
wherein with regard to the antenna assembly (6), one antenna (1 to 5) in each case is placed on the surfaces (8 to 12) of a truncated pyramid.

10. Assembly according to claim 9,
wherein with regard to the antenna assembly, the antennas (1 to 5) are placed on the surfaces (8 to 12) of a truncated pyramid having a square base.

11. Assembly according to one of the claims 7 to 10,
wherein diversely redundant GNSS receivers are connected in parallel with the GNSS receivers and comparators are connected downstream thereof in each case, wherein said comparators stop the generation of the respective main direction vector if there are differences between an output signal of the first GNSS receiver and a further output signal of the diversely redundant GNSS receiver in each case.

12. Assembly according to one of the claims 7 to 11,
wherein the evaluation device (26) is a microcontroller.

## Revendications

1. Procédé de détermination de position en utilisant le GNSS (Global Navigation Satellite System) au moyen d'un agencement (6) d'antennes, ayant plusieurs antennes (1 à 5), et d'un agencement (20) d'exploitation de signaux de réception, qui lui est subordonné, qui reçoit les signaux (A1 à A5) de réception d'antennes et qui contient des récepteurs (21 à 25) GNSS raccordés aux antennes (1 à 5) et ayant un dispositif (26) d'exploitation en aval,
dans lequel on utilise un agencement (6) d'antennes, dans lequel les antennes (1 à 5) sont orientées différemment avec des vecteurs directionnels différents, et dans lequel
• par rapport à chaque satellite (31 à 33) pouvant être détecté, on détecte, respectivement, les signaux (A1 à A5) de réception de toutes les antennes (1 à 5), en ce qui concerne leur rapport signal-bruit rapporté au satellite, en formant des valeurs de mesure de rapport signal-bruit spécifiques au satellite, et
• à partir des valeurs de mesure du rapport signal-bruit spécifiques au satellite, en ce que concerne chaque satellite (par exemple 31), on sélectionne les valeurs de mesure du rapport signal-bruit spécifiques au satellite qui, dans son rapport signal-bruit, se détachent positivement d'autres valeurs de mesure du rapport signal-bruit, en ce qui concerne, respectivement, le même satellite (par exemple 31),
**caractérisé en ce que**
• on forme, respectivement, un signal de vecteur directionnel principal rapporté au satellite à partir de signaux de vecteur directionnel des antennes, dont les valeurs de mesure du rapport signal-bruit spécifiques au satellite sont sélectionnées,
• on compare les signaux de vecteur directionnel principal rapporté au satellite à des signaux de vecteur directionnel caractérisant la position des satellites respectifs sur l'orbite et, si les écarts sont petits, il est produit une indication (N) de position.

2. Procédé suivant la revendication 1,
dans lequel on utilise un agencement (6) d'antennes, dans lequel les antennes (1 à 5) sont placées sur les surfaces d'un tronc de pyramide.

3. Procédé suivant la revendication 2,
dans lequel on utilise un agencement (6) d'antennes, dans lequel, respectivement, une antenne (1 à 5) est placée comme sur les surfaces (8 à 12) d'un tronc de pyramide.

4. Procédé suivant la revendication 2 ou 3,
dans lequel on utilise un agencement (6) d'antennes, dans lequel les antennes (1 à 5) sont placées sur les surfaces (8 à 12) d'un tronc de pyramide de surface de base carrée.

5. Procédé suivant l'une des revendications précédentes,
dans lequel on compare les signaux de sortie des récepteurs GNSS à d'autres signaux de sortie de récepteurs GNSS de diversité montés en parallèle aux récepteurs GNSS, et s'il y a des différences entre, respectivement, le un signal de sortie et l'autre signal de sortie, on supprime la production du vecteur directionnel principal respectif.

6. Procédé suivant l'une des revendications précédentes,
dans lequel on utilise, comme dispositif d'exploitation, un dispositif d'exploitation numérique sous la forme d'une micro-unité de commande.

7. Agencement de détermination de position en utilisant le GNSS (Global Navigation Satellite System), comprenant un agencement (6) d'antennes, ayant plusieurs antennes (1 à 5) et un agencement (20) d'exploitation de signaux de réception, qui lui est subordonné, qui reçoit des signaux (A1 à A5) de réception d'antennes et qui contient des récepteurs (21 à 25) GNSS raccordés aux antennes (1 à 5) et ayant un dispositif (26) d'exploitation en aval,
dans lequel l'agencement (6) d'antennes a des antennes (1 à 5) orientées différemment, en utilisant des vecteurs directionnels différents, et
dans lequel le dispositif (26) d'exploitation est constitué pour
• rapporté à chaque satellite (31 à 33) pouvant être détecté, détecter respectivement les signaux (A1 à A5) de réception de toutes les antennes (1 à 5), en ce qui concerne leur rapport signal-bruit rapporté au satellite, avec formation de valeurs de mesure de rapport signal-bruit spécifiques au satellite, et
• à partir des valeurs de mesure du rapport signal-bruit spécifiques au satellite, en ce qui concerne chaque satellite (par exemple 31), sélectionner les valeurs de mesure du rapport signal-bruit spécifiques au satellite, qui se détachent, dans le rapport signal-bruit, positivement d'autres valeurs de mesure du rapport signal-bruit, en ce qui concerne, respectivement, le même satellite (par exemple 31), **caractérisé en ce que** le dispositif d'exploitation est constitué, en outre, pour
• former, respectivement, un signal de vecteur directionnel principal rapporté au satellite, à partir des signaux de vecteur directionnel des antennes (1 à 5), dont les valeurs de mesure du rapport signal-bruit spécifiques au satellite sont sélectionnées, et
• comparer les signaux de vecteur directionnel principal rapportés au satellite aux signaux de vecteur directionnel caractérisant la position des satellites respectifs sur l'orbite et, si les écarts sont petits, donner une indication (N) de position.

8. Agencement suivant la revendication 7,
dans lequel les antennes (1 à 5) sont placées sur les surfaces d'un tronc de pyramide.

9. Agencement suivant la revendication 8,
dans lequel, pour l'agencement (6) d'antennes, respectivement, une antenne (1 à 5) est placée sur les surfaces (8 à 12) d'un tronc de pyramide.

10. Agencement suivant la revendication 9,
dans lequel, pour l'agencement d'antennes, les antennes (1 à 5) sont placées sur les surfaces (8 à 12) d'un tronc de pyramide de surface de base carrée.

11. Agencement suivant l'une des revendications 7 à 10,
dans lequel, aux récepteurs GNSS, sont montés en parallèle des récepteurs GNSS en diversité, auxquels, respectivement, des comparateurs sont montés en aval, qui, s'il y a des différences entre, respectivement, un signal de sortie du un récepteur GNSS et un autre signal de sortie du récepteur GNSS en diversité, suppriment la production du vecteur directionnel principal respectif.

12. Agencement suivant l'une des revendications 7 à 11,
dans lequel le dispositif (26) d'exploitation est une micro-unité de commande.
